# EUROPÄISCHE PATENTANMELDUNG

(11) **EP 1 669 741 A1**
(43) Veröffentlichungstag der Anmeldung: **14.06.2006**
(21) Anmeldenummer: 05104638.1
(22) Anmeldetag: 30.05.2005
(51) Int. Cl.: G01N 21/95

(54) **Verfahren und System zur Inspektion eines Wafers**

(30) Priorität: 16.06.2004 DE 102004029014
(71) Anmelder: Leica Microsystems Semiconductor GmbH, 35578 Wetzlar (DE)
(72) Erfinder: Backhauss, Henning, 35578 Wetzlar (DE); Kreh, Albert, 35606 Solm (DE)
(74) Vertreter: Reichert, Werner Franz

(57) **Zusammenfassung**

Die Erfindung betrifft ein Verfahren und eine Vorrichtung zur Inspektion eines Wafers (16), insbesondere zur Detektion von Makrodefekten wie Belichtungsfehler, wobei zumindest ein Teil der Waferoberfläche (17) mit einer Strahlungsquelle (22) beleuchtet, mittels einer Kamera (7) ein Bild dieser Oberfläche aufgenommen und die Oberfläche anhand des erhaltenen Bildes inspiziert wird. Zur Fehlerdetektion bei optimalen Bildkontrast wird vorgeschlagen die Waferoberfläche (17) telezentrisch mit kleiner Beleuchtungsapertur (4) zu beleuchten, wozu die Stahlungsquelle (22) mit einem entsprechenden Linsensystem (11) ausgestattet ist.

## Beschreibung

Die Erfindung betrifft ein Verfahren zur Inspektion eines Wafers, insbesondere zur Detektion von Makrodefekten wie Belichtungsfehler, wobei zumindest ein zu inspizierender Bereich der Waferoberfläche mit einer Strahlungsquelle beleuchtet, mittels einer Kamera ein Bild dieses Oberflächenbereichs aufgenommen und die Waferoberfläche anhand des erhaltenen Bildes inspiziert wird, sowie ein Waferinspektionssystem mit einer Strahlungsquelle zur Beleuchtung zumindest eines zu inspizierenden Bereichs der Waferoberfläche und mit einer Kamera zur Aufnahme eines Bildes dieses Oberflächenbereichs.

Die Inspektion von Wafern mit belichteter Resist-Schicht dient zur Fehlerdetektion in der Halbleiterfabrikation. Beim Belichtungsprozess eines mit Resist beschichteten Wafers werden Strukturen abschnittsweise auf die Resist-Schicht belichtet. Die Kenngrößen der Belichtung, wie Belichtungszeit, Belichtungsdosis, Fokus und Position, müssen sehr genau und stabil eingestellt werden, damit von belichtetem Abschnitt zu belichtetem Abschnitt nur geringe Abweichungen auftreten, die sich nicht auf die herzustellende Struktur auswirken. Ein Wafer wird in der Regel erst nach der Entwicklung des Resist auf Fehlbelichtungen untersucht. Fehlbelichtete Abschnitte weisen bei Inspektion zum Teil sehr geringe Kontrastunterschiede gegenüber den korrekt belichteten Abschnitten auf. Wird polychromatisch beleuchtet und beobachtet, werden die Kontraständerungen als Farbänderungen wahrgenommen.

Fehlbelichtungen verursachen meist defekte Produkte. Ein Wafer mit defekter bereits entwickelter Resist-Schicht kann aber durch ein Rework wieder verwendet werden und somit die Ausbeute erhöhen. Es besteht somit ein hohes Bedürfnis nach einer zuverlässigen Fehlerdetektion im Halbleiterherstellungsprozess.

Ein Verfahren und System zur optischen Inspektion einer Waferoberfläche sind aus dem Patent US-6,292,260 B1 bekannt. Hier werden mehrere Strahlungsquellen zur Beleuchtung der Waferoberfläche verwendet, wobei mittels einer ersten Strahlungsquelle die Oberfläche mit Hilfe eines halbdurchlässigen Umlenkspiegels senkrecht von oben im Hellfeld bestrahlt wird, und wobei zwei weitere im Winkel von 180° einander gegenüberliegend angeordnete Strahlungsquellen nahe der Waferoberfläche angebracht sind, die diese zur Erkennung von Kratzern und Partikeln unter geringem Winkel im Dunkelfeld streifend beleuchten. Mittels einer senkrecht auf die Waferoberfläche gerichteten CCD-Kamera wird von der gesamten Waferoberfläche ausgehende Strahlung detektiert, wobei die aufgenommenen Bilder zur Fehlerdetektion mit einem optimalen Bezugsbild (nahezu fehlerfreie Strukturen) verglichen werden.

Bei diesem bekannten Verfahren mit Beleuchtung der Waferoberfläche mit großer Apertur wird aus verschiedenen Bereichen der Waferoberfläche stammendes, gebeugtes, gestreutes und reflektiertes Licht über verschiedene Raumwinkel gemittelt. Aus diesem Grunde ist der Kontrastunterschied zwischen belichteten Abschnitten auf der Waferoberfläche, die mit voneinander abweichenden Belichtungs-Kenngrößen belichtet wurden, sehr klein, so dass Fehler nur schwer detektiert werden können.

Aus der US-5,777,729 ist ein weiteres Verfahren und eine weitere Vorrichtung zur Waferinspektion bekannt, wobei die Waferoberfläche mittels eines langgestreckten ausgedehnten Flächenstrahlers monochromatisch beleuchtet wird. Auf Grund der Ausdehnung des Strahlers wird die Waferoberfläche diffus unter unterschiedlichsten Winkeln beleuchtet. Eine oder mehrere CCD-Kameras detektieren die von der Oberfläche gestreute und reflektierte Strahlung. Es wird bei der Struktur der Waferoberfläche ein Gittermodell zugrunde gelegt, wobei höhere Ordnungen der Beugungsstrahlung detektiert werden. Defekte in der Struktur der Waferoberfläche können durch Vergleich des aufgenommenen Bildes mit einem optimalen Bezugsbild (fehlerfreie Strukturen) ermittelt werden. Weiterhin wird zur Detektion von störenden Partikeln das Streulicht aufgenommen.

Dieses bekannte Waferinspektionsverfahren gestaltet sich jedoch aufwändig, da eine große Beleuchtungsquelle und viele Detektoren notwendig sind. Die Vielzahl der Detektoren erfordert zudem einen hohen Rechenaufwand bei der Auswertung der aufgenommenen Bilder zur Inspektion der Waferoberfläche. Auch hier zeigt sich, dass die Kontrastinformationen der aufgenommenen Bilder in der Praxis häufig nicht ausreichen, alle Makrodefekte zuverlässig zu detektieren.

Es wurden zur Waferinspektion weiterhin eine koaxiale diffuse polychromatische Beleuchtung mit einer flächigen Faserbeleuchtung sowie eine seitliche polychromatische Schräglicht-Beleuchtung mit einer Faserbeleuchtungsreihe eingesetzt. Es hat sich gezeigt, dass die polychromatische Beleuchtung allein den durch die diffuse Beleuchtung verursachten schwachen Kontrast nicht beseitigen kann, und dass eine Schräglichtbeleuchtung eher für die Erkennung von Partikeln geeignet ist, jedoch nur bedingt zur Erkennung von Belichtungsfehlern.

Ein von der Anmelderin vertriebenes System, Leica LDS3000 M, vereint verschiedene Methoden zur Detektion von Mikro- und Makrodefekten auf Waferoberflächen. Hierzu werden einzelne Flächen auf dem Wafer, ebenso wie die gesamte Waferoberfläche, untersucht. Typische detektierte Makrodefekte sind: Kratzer, Hot-Spots, Belichtungsfehler, wie unbelichtete oder defokussiert belichtete Stellen, Partikel auf der Oberfläche sowie globale Defekte, die zellenübergreifend vorhanden sind und erst durch Untersuchung der gesamten Waferoberfläche sichtbar werden. Das System verwendet eine Kombination aus Hell- und Dunkelfeldbeleuchtung. Die erhaltenen Bilder werden mittels einer Bildverarbeitungssoftware ausgewertet, wobei auch hier ein Vergleich mit einem fehlerfreien Bezugsbild (Golden Image) zur Anwendung kommt. Die detektierten Defekte werden anhand einer Wissens-Datenbank klassifiziert. Es hat sich gezeigt, dass bei diesem bekannten System zur zuverlässigen Erkennung von Belichtungsfehlern eine erhöhte Kontrasterzeugung nötig ist.

Aufgabe vorliegender Erfindung ist daher, ein Verfahren und ein System zur Inspektion von Wafern, insbesondere zur Detektion von Makrodefekten wie Belichtungsfehler, anzugeben, die es ermöglichen, Defekte und Fehler auf der Waferoberfläche mit ausreichendem Kontrast darzustellen.

Diese Aufgabe wird durch das erfindungsgemäße Verfahren und das erfindungsgemäße System gelöst. Vorteilhafte Ausgestaltungen ergeben sich aus den jeweiligen Unteransprüchen und der nachfolgenden Beschreibung.

Bei dem erfindungsgemäßen Verfahren wird die Waferoberfläche oder zumindest der zu inspizierende Bereich telezentrisch beleuchtet. Mittels einer Kamera wird ein Bild dieser Oberflächenbereichs aufgenommen, und das Bild wird anschließend auf die gesuchten Defekte und Fehler hin inspiziert.

Der Begriff der Telezentrie spielt insbesondere in der berührungslosen optischen Messtechnik eine Rolle und soll im folgenden erläutert werden. Bei dieser Messtechnik wird das zu untersuchende Objekt mittels objektseitig telezentrischen Objektiven abgebildet. Die Eigenschaft solcher Objektive ist es, einen Gegenstand unabhängig von seiner Entfernung immer mit der gleichen Größe abzubilden. Bei der automatisierten, berührungslosen Messung ist es in der Regel unmöglich, die Prüflinge immer wieder exakt von der gleichen Position aus zu messen. Dieser Umstand hat zur Entwicklung der objektseitig telezentrischen Objektive geführt. Ein objektseitig telezentrischer Strahlenverlauf liegt vor, wenn objektseitig die Hauptstrahlen achsparallel verlaufen. Wird ein Objekt fester Größe mit einem objektseitig telezentrischen Objektiv scharf abgebildet, so wird ein defokusiertes Objekt derselben Größe zwar verschwommen, aber ebenfalls in gleicher Größe abgebildet, da sein Hauptstrahl objektseitig telezentrisch, d.h. parallel zur optischen Achse, verläuft. Dieses Ergebnis kann durch Verwendung eines beidseitig, also objekt- und bildseitig, telezentrischen Objektivs noch verbessert werden.

Bei der erfindungsgemäßen telezentrischen Beleuchtung der Waferoberfläche wird diese von parallel zueinander verlaufenden Strahlungsbüscheln beleuchtet. Hierdurch wird an jedem Punkt des Objekts (Waferoberfläche) aus der gleichen Raumrichtung und mit dem gleichen Raumwinkel beleuchtet. Da nicht diffus beleuchtet wird, also auch nicht über verschiedene Raumrichtungen gemittelt wird, wird eine Verbesserung des Kontrastunterschiedes zwischen korrekt- und fehlbelichteten Abschnitten auf der Waferoberfläche erreicht.

Es ist von Vorteil, den Bildkontrast über Einstellung des Beleuchtungswinkels weiter zu optimieren. Hierzu stehen zwei Parameter zur Verfügung, nämlich zum einen der Beleuchtungswinkel in Bezug auf die Ebene der Waferoberfläche, zum anderen der Beleuchtungswinkel in Bezug auf den Verlauf der Strukturen auf der Waferoberfläche. Diese Möglichkeit der Kontrastoptimierung besteht bei der herkömmlichen Beleuchtung mit großer Apertur (diffus) nicht.

Es hat sich gezeigt, dass eine Beleuchtung im Auflicht, vorzugsweise bei einem Winkel in einem Bereich von 3° bis 90°, weiter vorzugsweise von 10° bis 85°, weiter vorzugsweise von 15° bis 85°, weiter vorzugsweise von 25° bis 80°, weiter vorzugsweise von 45° +/- 10°, relativ zur Waferoberfläche, gute Kontrastunterschiede bringt. Die genaue Winkelwahl wird sinnvollerweise dadurch getroffen, dass die Kontrastunterschiede zwischen korrekt- und fehlbelichteten Waferabschnitten maximal werden.

Weiterhin hat sich gezeigt, dass sich hohe Kontrastunterschiede einstellen, wenn im wesenlichen parallel zum Verlauf einer auf der Waferoberfläche verlaufenden Hauptstruktur beleuchtet wird. In der Regel ist die Waferoberfläche mit meist zwei zueinander senkrecht verlaufenden parallelen Hauptstrukturen bedeckt. Hohe Kontrastunterschiede erhält man, wenn die Projektion der Büschelachsen der telezentrischen Beleuchtungsstrahlung auf die Waferoberfläche parallel zu einer der genannten Hauptstrukturen verläuft.

Auch hier gilt jedoch allgemein, dass der Beleuchtungswinkel relativ zum Verlauf der Hauptstrukturen auf dem Wafer derart eingestellt werden kann, dass sich maximale Kontrastunterschiede von fehl- zu korrekt-belichteten Abschnitten einstellen.

Es kann vorteilhaft sein, die Waferoberfläche zusätzlich derart zu beleuchten, dass eine Beobachtung im Dunkelfeld möglich ist. Hierzu ist es zweckmäßig, zwei Bestrahlungsquellen unter kleinem Winkel (Streiflicht) auf die Waferoberfläche zu richten, wobei die beiden Strahlungsrichtungen dieser Strahlungsquellen vorzugsweise einen Winkel von 90° zueinander einschließen und auf denselben zu inspizierenden Bereich der Waferoberfläche gerichtet sind. Diese zusätzliche Dunkelfeld-Beobachtung kann im aufgenommenen Bild weitere wertvolle Informationen über Fehler und Defekte, wie Kratzer und Partikel, liefern.

Hierbei ist es vorteilhaft, wenn die Projektion der Strahlungsrichtung der Dunkelfeldbestrahlungsquelle(n) auf die Waferoberfläche mit einer auf dieser Waferoberfläche verlaufenden Hauptstruktur einen Winkel von etwa 45° einschließt. Diese Orientierung wirkt sich kontrasterhöhend auf zu detektierende Fehler und Defekte aus.

Es ist weiterhin von Vorteil, wenn die Waferoberfläche zusätzlich im Hellfeld beleuchtet wird. Dies kann alternativ oder zusätzlich zur oben erwähnten Dunkelfeldbeleuchtung geschehen. Die zusätzliche Hellfeldbeleuchtung kann im aufgenommenen Bild weitere wertvolle Informationen über Fehler, wie Farbfehler oder Benetzungsfehler liefern.

Bei dem erfindungsgemäßen Verfahren ist weiterhin von Vorteil, wenn die Kamera zur Aufnahme des zu inspizierenden Bereichs der Waferoberfläche mit einem (objektseitig und evtl. auch bildseitig) telezentrischen Objektiv ausgestattet wird. Hierdurch kann jeder Objektpunkt unter dem gleichen Beobachtungswinkel und dem gleichen Raumwinkel von der Kamera erfasst werden. Dadurch wird das Rauschen im Kamerabild reduziert. Es kann eine Flächenkamera eingesetzt werden, die den zu untersuchenden Bereich der Waferoberfläche abbildet.

Alternativ kann die Kamera mit einem nicht-telezentrischen Objektiv (sog. entozentrisches Objektiv, wie z.B. Normal-, Makro- oder Teleobjektiv) ausgestattet sein, wenn der Arbeitsabstand sehr viel größer als die Diagonale des Objektfeldes ist. Es lässt sich dann in der Praxis und im Sinne dieser Anmeldung noch von einem objektseitigen telezentrischen Strahlenverlauf sprechen.

Die von der Kamera aufgenommene Strahlung aus dem beleuchteten Bereich der Waferoberfläche setzt sich aus Strahlung zusammen, die an den Strukturen der Waferoberfläche gebeugt, gestreut und reflektiert worden ist. Durch die erfindungsgemäße telezentrische Beleuchtung wird jedem Punkt im Objektfeld auf der Waferoberfläche ein definierter begrenzter Winkelvorrat angeboten, so dass die Charakteristik der Beleuchtung sich von Abschnitt zu Abschnitt kaum unterscheidet. Bei Verwendung eines telezentrischen Objektivs gilt für die Beobachtungsseite das analoge. Durch dieses Vorgehen kann eine homogene Beleuchtungs- und Beobachtungscharakteristik über den zu untersuchenden Bereich der Waferoberfläche erzeugt werden, so dass fehlbelichtete Abschnitte auf Grund hoher Kontrastdifferenz schnell erkennbar werden.

Alternativ zu einer monochromatischen Beleuchtung ist es zweckmäßig, eine polychromatische Beleuchtung zu wählen, da in diesem Fall die Informationen mehrerer Farben zur Detektion von Defekten und Fehlern herangezogen werden können. Hierzu können eine polychromatische Lichtquelle, mehrere monochromatische Lichtquellen räumlich benachbart oder aber auch zeitlich sequentiell zum Einsatz kommen.

Es hat sich weiterhin gezeigt, dass Belichtungsfehler gut erkannt werden können, wenn die Kamera mit ihrer Achse im westenlichen parallel zur Flächennormalen der Waferoberfläche und auf den beleuchteten Bereich der Waferoberfläche gerichtet angeordnet wird. Die Beobachtung erfolgt somit am Besten senkrecht von oben, während die Beleuchtung schräg im Auflicht erfolgt.

Vorzugsweise können Wellenlängen aus dem sichtbaren bis ultravioletten Bereich verwendet werden. Wellenlängen in diesem Bereich wechselwirken am stärksten mit den zu untersuchenden Strukturen auf der Waferoberfläche.

Es erweist sich als vorteilhaft, als Strahlungsquelle einen punktförmigen Strahler oder einen Flächenstrahler geringer Ausdehnung, wie einen Lichtwellenleiter, zu verwenden, wobei zur Erzeugung telezentrischer Beleuchtung ein Linsensystem vorgeschaltet wird. Bei Verwendung solcher Strahler geringer Ausdehnung entstehen jeweils konvergierende Strahlungsbüschel, die einen geringen Öffnungswinkel, also eine geringe Beleuchtungsapertur aufweisen. Diese geringe Beleuchtungsapertur erweist sich zum Zwecke der Erfindung als nicht störend, so dass im Sinne der Erfindung in ausreichendem Maße von einer telezentrischen Beleuchtung gesprochen werden kann.

Gegenstand der Erfindung ist weiterhin ein Waferinspektionssystem mit einer Strahlungsquelle zur Beleuchtung zumindest eines zu inspizierenden Bereichs der Waferoberfläche und einer Kamera zur Aufnahme eines Bildes dieses Oberflächenbereichs. Hierbei ist die Strahlungsquelle zur Erzeugung telezentrischer Beleuchtung ausgebildet.

Wie bereits im Zusammenhang mit dem erfindungsgemäßen Verfahren erläutert, kann die Strahlungsquelle derart ausgebildet sein, dass ein punktförmiger Strahler oder ein Flächenstrahler geringer Ausdehnung vorgesehen ist, wobei dem Strahler ein Linsensystem zur Erzeugung telezentrischer Beleuchtung vorgeschaltet ist. Als Strahler lässt sich beispielsweise ein Lichtwellenleiter verwenden. Diese konkrete Ausgestaltung der Strahlungsquelle garantiert eine im erfindungsgemäßen Sinne telezentrische Beleuchtung.

Bezüglich der sich aus den Unteransprüchen ergebenen Ausgestaltungen des erfindungsgemäßen Waferinspektionssystems und der sich daraus ergebenden Vorteile sei auf die Erläuterungen der Erfindung im Zusammenhang mit dem besprochenen erfindungsgemäßen Verfahren hingewiesen. Im übrigen ergeben sich weitere Ausgestaltungen des erfindungsgemäßen Waferinspektionssystems auch aus den nachfolgend erläuterten Ausführungsbeispielen.

Im folgenden soll die Erfindung und ihre Vorteile anhand in den Figuren dargestellter Ausführungsbeispiele näher erläutert werden.
Figur 1 zeigt schematisch eine Strahlungsquelle mit Linsensystem zur Erzeugung telezentrischer Beleuchtung, wobei Figur 1A eine Gesamtansicht und Figur 1B eine Detailansicht wiedergibt,
Figur 2 zeigt schematisch ein System zur Inspektion von Wafern zur Umsetzung des erfindungsgemäßen Verfahrens.
Figur 3 zeigt sehr schematisch nochmals den prinzipiellen Aufbau des Waferinspektionssystems aus Figur 2 in einer Seitenansicht (Figur 3A) und einer Draufsicht (Figur 3B).
Figur 4 zeigt wiederum sehr schematisch eine Waferinspektionseinrichtung gemäß Figur 2 mit zusätzlichen Beleuchtungsquellen für die Beobachtung im Hellfeld sowie im Dunkelfeld (Figur 4A), wobei Figur 4B eine Draufsicht darstellt.

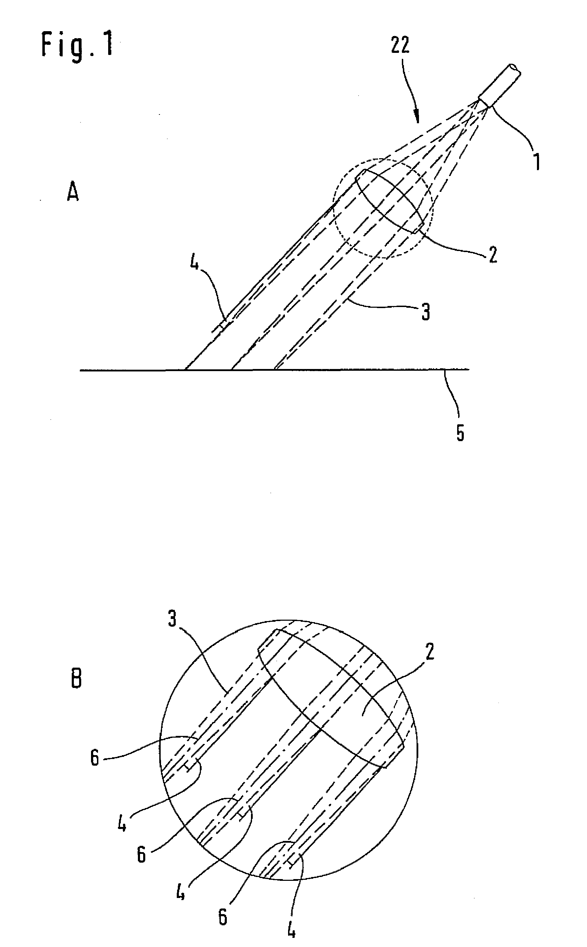

Figur 1 zeigt das Grundprinzip der erfindungsgemäßen telezentrischen Beleuchtung einer Objektebene 5, die im konkreten Anwendungsfall eine Waferoberfläche darstellt. Als Strahlungsquelle 22 wird in diesem Ausführungsbeispiel ein Flächenstrahler geringer Ausdehnung, wie ihn ein Lichtwellenleiter darstellt, verwendet. Mittels eines Linsensystems 2 (kollimierende Optik), das hier nur schematisch dargestellt ist, werden parallel verlaufende Strahlenbüschel 3 mit geringer Beleuchtungsapertur 4 erzeugt. Die Strahlenbüschel 3 treffen auf die Objektebene 5, so dass jeder Punkt dieser Objektebene aus der gleichen Raumrichtung und mit dem gleichen Raumwinkel beleuchtet wird.

Der in Figur 1A durch einen gepunkteten Kreis markierte Bereich ist in Figur 1B vergrößert wiedergegeben. Die parallel verlaufenden Strahlenbüschel sind wieder mit 3 gekennzeichnet. In der Detailansicht ist klar zu erkennen, dass die Achsen 6 der Strahlenbüschel 3 parallel zueinander verlaufen. Die Beleuchtungsapertur 4 stimmt in dieser Detailansicht mit der Beleuchtungsapertur 4 aus Figur 1A überein. Durch die geringe Beleuchtungsapertur 4 ist gewährleistet, dass keine diffuse Beleuchtung der Objektebene 5 oder eine solche mit großen Aperturen erfolgt.

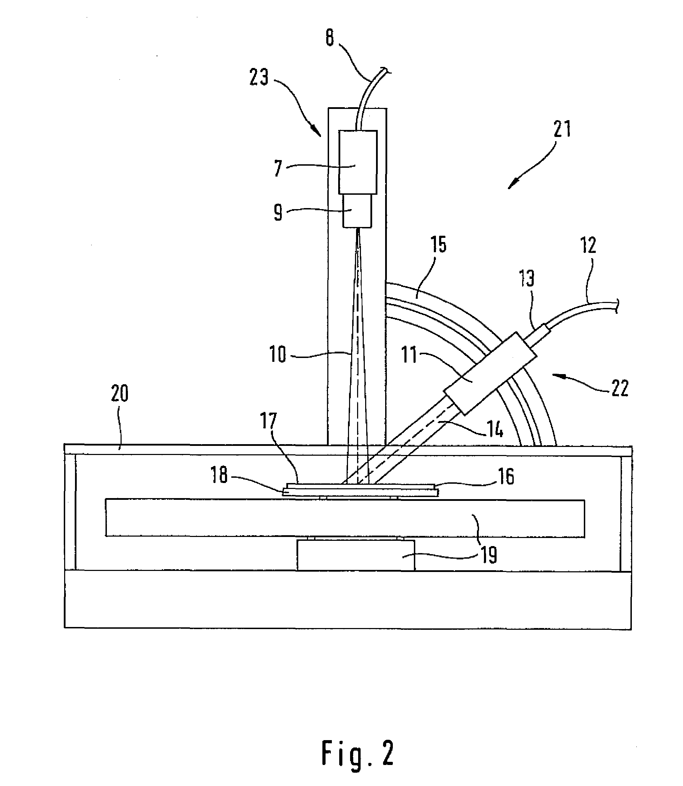

Figur 2 zeigt schematisch ein System 21 zur Inspektion eines Wafers 16. Bei der Herstellung solcher Wafer durchläuft dieser mehrere Herstellungsschritte, bei denen verschiedene Schichten auf die Oberfläche aufgebracht werden, die häufig zum Teil wieder entfernt werden, um insgesamt eine Struktur auszubilden, die einen bestimmten elektrischen Schaltkreis realisiert. Die Herstellungsschritte schließen neben dem Aufbringen von Schichten das Ätzen, die Ionenimplantation, Diffusionsprozesse, Metallisierungen, etc. ein. Zur Ausbildung einer strukturierten Schicht wird ein Fotolithographieverfahren eingesetzt, bei dem die Waferoberfläche mit einem Fotoresist gleichmäßig beschichtet wird. Die Fotoresistschicht wird mit einer Maske belichtet. Die belichteten Fotoresist-Abschnitte verändern ihre chemischen Eigenschaften, so dass durch den anschließenden Schritt der Entwicklung entsprechende Fotoresist-Abschnitte von der Oberfläche entfernt werden können. Es verbleibt die gewünschte Fotoresiststruktur. Es können sich nun verschiedene Fabrikations-schritte anschließen, bei denen die Oberfläche verschiedenen chemischen Behandlungen, Ionenimplantationen, Metallbeschichtungen, Ätzprozessen und dergleichen unterzogen wird, ohne die unterhalb der Fotoresiststruktur liegenden Schichten zu beeinflussen. Anschließend wird die Fotoresistschicht entfernt und der Wafer gesäubert. Weitere Fotolithographieschritte und Fabrikations-Schritte können sich anschließen.

Während des gesamten Herstellungsprozesses ist die Waferoberfläche in eine Vielzahl von Zellen (Dies) unterteilt, die jeweils identische Fabrikationsschritte durchlaufen. Nach deren Abschluß werden die einzelnen Zellen durch Schneiden des Wafers isoliert und bilden die Basis sogenannter Chips.

Belichtungsfehler verursacht durch eine fehlerhafte Belichtungszeit, Belichtungsdosis oder fehlerhaften Fokus, verursachen sogenannte Makrodefekte, die in der Regeln zu einem fehlerhaften Produkt führen. Daher wird die Waferoberfläche in der Regel nach Entwicklung der Fotoresist-Schicht auf Defekte untersucht. Eine fehlbelichtete Schicht kann nämlich zu diesem Zeitpunkt wieder abgetragen und der Wafer einem erneuten Fotolithographie-Prozess zugeführt werden. Durch dieses Rework kann der Ausschuss erheblich gesenkt werden.

Ein System zur Detektion solcher Belichtungsfehler ist in Figur 2 mit 21 bezeichnet. Dieses System 21 weist im Wesentlichen eine Strahlungsquelle 22 zur Beleuchtung der Waferoberfläche 17 und eine Kamera 23 zur Aufnahme eines Bildes dieser Waferoberfläche 17 auf, wobei das erhaltene Bild anschließend auf mögliche Defekte hin inspiziert wird. In diesem Ausführungsbeispiel ist das Inspektionssystem 21 in den Herstellungsprozess eines Wafers 16 integriert, wobei der Wafer 16 nach jedem Entwicklungsschritt im Fotolithographie-Prozess in das Inspektionssystem 21 transferiert werden kann. Hierzu wird der Wafer 16 automatisch auf eine Auflage 18 gebracht, auf der er zweckmäßigerweise mittels Vakuumansaugung in seiner Position festgehalten wird. Während der Inspektion befindet sich der Wafer 16 sinnvollerweise in einem geschlossenen Raum 20, der Reinraumanforderungen genügt.

Die in Figur 2 dargestellte Strahlungsquelle 22 umfasst in einer vorteilhaften Ausführung einen Lichtleiter 12 zur Zuführung von Strahlungsenergie sowie ein Linsensystem 11 zur Erzeugung telezentrischer Beleuchtung. Lichtleiter 12 und Linsensystem 11 sind mit einem Anschlussstück 13 gekoppelt. Bei dem eigentlichen Strahler handelt es sich um einen - wie in Figur 1A dargestellten - Flächenstrahler geringer Ausdehnung, der zur Erzeugung telezentrischer Beleuchtung mittels des Linsensystems 11 verwendet wird. Die telezentrischen Strahlenbüschel sind mit 14 bezeichnet. Die Strahlungsquelle 22 ist auf einem Winkelschieber 15 verschiebbar angeordnet, so dass in Bezug auf die Ebene der Waferoberfläche 17 ein geeigneter Beleuchtungswinkel eingestellt werden kann, um die erforderlichen Bildkontraste optimal einstellen zu können.

Das Kamerasystem 23 umfasst im wesentlichen eine Kamera 7, wobei der Begriff Kamera jeglichen geeigneten optischen Detektor oder jegliche geeignete Bilderfassungseinrichtung meint. Bei der Kamera 7 handelt es sich geeigneterweise um einen zeilen- oder matrixförmigen Bildaufnehmer (z. B. CCD oder CMOS), wobei Monochrom- oder Farbkameras zum Einsatz kommen können. Die Kamera 7 weist zweckmäßigerweise ein (zumindest objektseitig) telezentrisches Objektiv auf. Über eine Datenleitung 8 werden die Bilddaten der Kamera 7 pixelweise ausgelesen, so dass die erhaltene Bildinformation mittels eines Graustufenbildes dargestellt werden kann. Bei Verwendung polychromatischer Beleuchtung erhält man für jede detektierte Farbe ein solches Graustufenbild.

Die Verwendung eines telezentrischen Objektivs hat den Vorteil, dass jeder Objektpunkt auf der Waferoberfläche 17 aus der gleichen Raumrichtung und unter dem gleichen Raumwinkel detektiert wird, so dass sowohl die Beleuchtungscharakteristik als auch die Beobachtungscharakteristik über den gesamten zu inspizierenden Bereich der Waferoberfläche 17 homogen ist. Hierdurch sind ideale Vorraussetzungen hierfür gegeben, Defekte im untersuchten Bereich zuverlässig erkennen zu können.

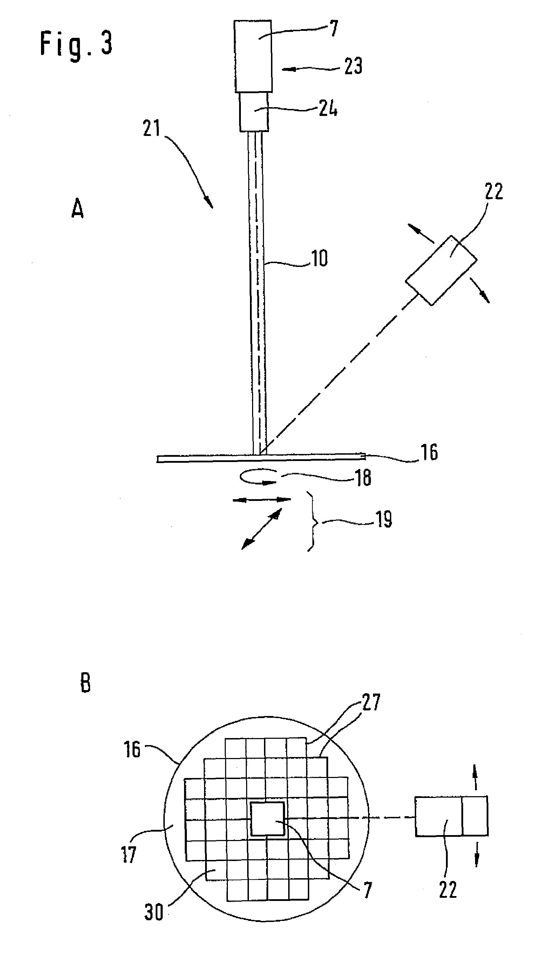

Alternativ ist auch die Verwendung eines nicht-telezentrischen Objektivs 9 als Kameraobjektiv möglich, dessen Arbeitsabstand viel größer als die Diagonale des Objektbereichs ist. Wie in Figur 2 gezeigt, ist ein solches Objektiv 9 auch zweckmäßig, da nur kleine Raumwinkel abgenommen werden, wie der Abbildungsstrahlengang 10 illustriert. Bei Verwendung eines telezentrischen Objektivs 24 (vgl. Figur 3) entsteht ein paralleler Abbildungsstrahlengang.

Zur Auswertung des erhaltenen Bildes können bekannte Verfahren der Bildverarbeitung und Mustererkennung herangezogen werden, wie etwa der Vergleich des aufgenommenen Bildes mit einem Idealbild ("Golden Image"). Mit dem hier vorgestellten System können bestimmte Bereiche der Waferoberfläche 17 sukzessive inspiziert werden, es ist aber auch möglich, die gesamte Waferoberfläche global zu inspizieren.

Das hier dargestellte Inspektionssystem 21 nutzt die Vorteile der erfindungsgemäßen telezentrischen Beleuchtung zur Abbildung des zu inspizierenden Objektes, wodurch sich für die Fehlerdetektion optimale Kontrastunterschiede zwischen fehlerfreien Abschnitten auf der Waferoberfläche 17 und solchen insbesondere mit Makrodefekten ergeben. Das erfindungsgemäße Verfahren und System eigenen sich insbesondere für die Detektion von Belichtungsfehlern bei der Waferherstellung.

Figur 3A zeigt in stark schematisierter Seitenansicht im wesentlichen das bereits in Figur 2 dargestellte erfindungsgemäße Waferinspektionssystem 21, wobei die hier verwendete Kamera 7 ein (zumindest objektseitig) telezentrisches Objektiv 24 aufweist. Der entsprechende parallele Abbildungsstrahlengang ist mit 10 bezeichnet. Die telezentrische Strahlungsquelle ist wiederum mit 22 bezeichnet. Der Wafer 16 liegt auf einer drehbaren Auflage 18 (angedeutet durch den kreisförmigen Pfeil), die in x- und y-Richtung mittels eines x-, y-Scanningtisches 19 (vgl. Figur 2) verschoben werden kann.

Alle übrigen Bestandteile des Waferinspektionssystems gemäß Figur 3 stimmen mit denen des in Figur 2 gezeigten Systems überein und sollen daher im Folgenden nicht weiter besprochen werden.

Figur 3B zeigt eine Draufsicht auf das in Figur 3A gezeigte System 21, wobei diese Darstellung auch für eine Draufsicht auf das in Figur 2 dargestellte System gültig ist. Dargestellt ist der Wafer 16 und die auf der Waferoberfläche 17 verlaufenden Hauptstrukturen 27. Die einzelnen Zellen (Dies), die durch diese Hauptstrukturen 27 gebildet sind, sind mit 30 bezeichnet. Diese Zellen 30 werden im späteren Verarbeitungsprozess zu Chips verarbeitet. Wie aus Figur 3B ersichtlich, verläuft die Projektion der Achse der Strahlenbüschel 14 der telezentrischen Strahlungsquelle 22 auf die Waferoberfläche 17 im wesentlichen parallel zu einer der Hauptstrukturen 27 auf der Waferoberfläche 17 (in diesem Fall zu den waagrecht gezeichneten Hauptstrukturen). Die Kamera 7 ist in dieser Ausführungsform senkrecht über der Waferoberfläche 17 und auf den zu inspizierenden Bereich gerichtet. Es hat sich gezeigt, dass bei dieser Anordnung von Beleuchtungs- und Beobachtungsrichtung Makrodefekte im zu inspizierenden Bereich mit hohem Kontrast abgebildet werden.

Es ist zweckmäßig, wenn, wie in Figur 3B gezeigt, die telezentrische Strahlungsquelle 22 sowohl in ihrer Strahlungsrichtung bezüglich der Hauptstrukturen 27 auf der Waferoberfläche 17 verschiebbar ist (in einer Ebene parallel zur Waferoberfläche 17), als auch zur Einstellung des Beleuchtungswinkels in Bezug auf die Waferoberfläche 17 (vgl. Figur 3A und Figur 2).

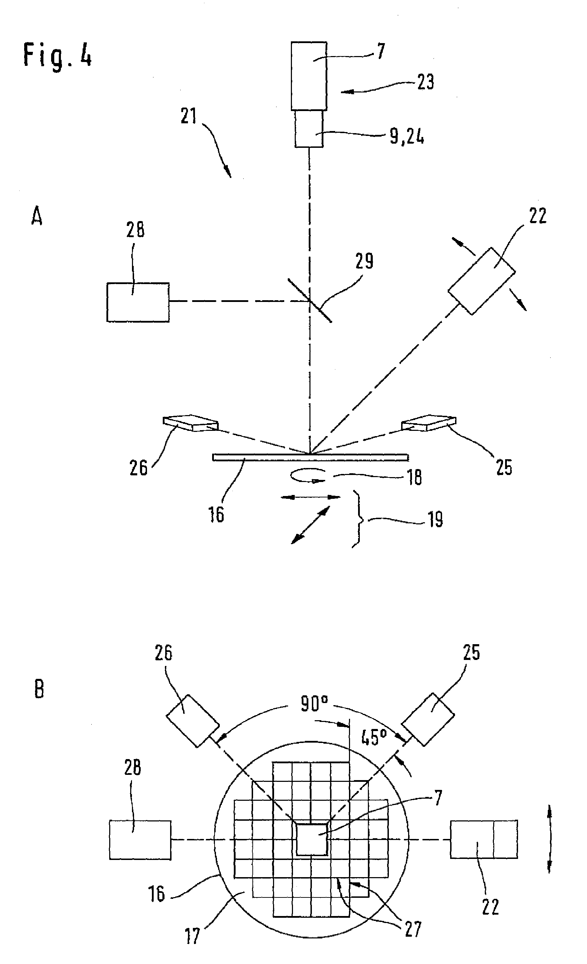

Figur 4 zeigt wiederum in stark schematisierter Form ein Waferinspektionssystem 21 gemäß Figur 3, so dass auf das in Figur 3 dargestellte erläuterte System voll inhaltlich verwiesen werden kann. In einer ersten Ausgestaltung zeigt das System gemäß Figur 4 eine zusätzliche Hellfeld-Bestrahlungsquelle 28. In einer zweiten Ausgestaltung zeigt dieses System zwei zusätzliche Dunkelfeld-Bestrahlungsquellen 25 und 26. Der Einfachheit halber sind beide Ausgestaltungen in Figur 4 in Kombination dargestellt. Es sei jedoch darauf hingewiesen, dass jede der beiden Ausgestaltungen in gleicher Weise für sich genommen ohne die jeweils andere Ausgestaltung in dem Waferinspektionssystem implementiert sein kann.

Die Strahlung der Hellfeld-Bestrahlungsquelle 28 wird über einen halbdurchlässigen Strahlenteiler 29 senkrecht auf den zu inspizierenden Bereich der Waferoberfläche 17 gelenkt. Diese zusätzliche Beobachtung im Hellfeld kann unter Umständen zur Detektion von Fehlern wie Farb- oder Benetzungsfehler, sinnvoll sein, wenn diese mit der erfindungsgemäßen telezentrischen Beleuchtung allein nicht detektiert werden können.

Die beiden Dunkelfeld-Bestrahlungsquellen 25 und 26 sind, wie in der Draufsicht der Figur 4B dargestellt, bezüglich ihrer Beleuchtungsrichtung in einem Winkel von 90° zueinander angeordnet. Hierdurch kann jede der beiden Dunkelfeld-Bestrahlungsquelle 25 und 26 die auf der Waferoberfläche 17 verlaufenden Hauptstrukturen 27 unter einem Winkel von 45° beleuchten. Bezüglich der Waferoberfläche 17 erfolgt die Dunkelfeldbeleuchtung unter schrägen oder streifenden Einfall (siehe Figur 4A). Es hat sich gezeigt, dass die Beobachtung im Dunkelfeld Defekte wie Kratzer oder Partikel auf der Waferoberfläche mit hohem Kontrast bei den hier gewählten Bedingungen darstellen kann.

### Bezugszeichenliste

- 1: Strahler, Lichtwellenleiter
- 2: Linsensystem
- 3: Strahlenbüschel
- 4: Beleuchtungsapertur
- 5: Objektebene
- 6: Achsen der Strahlenbüschel
- 7: Kamera
- 8: Datenleitung
- 9: Objektiv der Kamera
- 10: Abbildungsstrahlengang
- 11: Linsensystem
- 12: Lichtleiter
- 13: Anschlussstück
- 14: Strahlenbüschel
- 15: Winkelschieber
- 16: Wafer
- 17: Waferoberfläche
- 18: Auflage
- 19: x-, y-Scanningtisch
- 20: Raum
- 21: Inspektionssystem
- 22: Strahlungsquelle
- 23: Kamerasystem
- 24: telezentrisches Objektiv der Kamera
- 25: Dunkelfeld-Bestrahlungsquelle
- 26: Dunkelfeld-Bestrahlungsquelle
- 27: Hauptstruktur auf Waferoberfläche
- 28: Hellfeld-Bestrahlungsquelle
- 29: Strahlteiler
- 30: Zelle (Die)

## Patentansprüche

1. Verfahren zur Inspektion eines Wafers (16), insbesondere zur Detektion von Makrodefekten wie Belichtungsfehler, wobei zumindest ein zu inspizierender Bereich der Waferoberfläche (17) mit einer Strahlungsquelle (22) beleuchtet, mittels einer Kamera (7) ein Bild dieses Oberflächenbereichs aufgenommen und der Oberflächenbereich anhand des erhaltenen Bildes inspiziert wird,
**dadurch gekennzeichnet,**
**dass** der zu inspizierende Bereich der Waferoberfläche (17) telezentrisch beleuchtet wird.

2. Verfahren nach Anspruch 1, **dadurch gekennzeichnet, dass** als Strahlungsquelle (22) ein im wesentlichen punktförmiger Strahler (1) mit einem vorgeschalteten Linsensystem (2; 11) verwendet wird, um den zu inspizierenden Bereich der Waferoberfläche (17) mit kleiner Beleuchtungsapertur (4) zu beleuchten.

3. Verfahren nach Anspruch 1 oder 2, **dadurch gekennzeichnet, dass** der Bildkontrast über Einstellungen des Beleuchtungswinkels relativ zur Ebene der Waferoberfläche (17) optimiert oder relativ zum Verlauf der Strukturen auf dem Wafer (16) optimiert wird.

4. Verfahren nach einem der Ansprüche 1 bis 3, **dadurch gekennzeichnet, dass** eine Kamera (7) mit telezentrischem Objektiv (9) verwendet wird, wobei der Arbeitsabstand sehr viel größer als die Diagonale des Objektfeldes ist.

5. Verfahren nach einem der Ansprüche 1 bis 4, **dadurch gekennzeichnet, dass** polychromatisch oder monochromatisch mit Wellenlängen im sichtbaren bis ultravioletten Bereich beleuchtet wird.

6. Verfahren nach einem der Ansprüche 1 bis 5, **dadurch gekennzeichnet, dass** im Auflicht, vorzugsweise bei einem Winkel in einem Bereich von 3° bis 90°, weiter vorzugsweise von 10° bis 85°, weiter vorzugsweise von 15° bis 85°, weiter vorzugsweise von 25° bis 80°, weiter vorzugsweise von 45° +/- 10°, relativ zur Waferoberfläche (17), beleuchtet wird.

7. Verfahren nach einem der Ansprüche 1 bis 6, **dadurch gekennzeichnet, dass** zusätzlich im Auflicht-Dunkelfeld beleuchtet wird.

8. Verfahren nach Anspruch 7, **dadurch gekennzeichnet, dass** zumindest eine Dunkelfeld-Bestrahlungsquelle (25, 26) derart angeordnet wird, dass die Projektion ihrer Strahlungsrichtung auf die Waferoberfläche (17) mit einer auf dieser Waferoberfläche verlaufenden Hauptstruktur (27) einen Winkel von etwa 45° einschließt.

9. Waferinspektionssystem zur Inspektion eines Wafers (16), insbesondere zur Detektion von Makrodefekten wie Belichtungsfehler, mit einer Strahlungsquelle (22) zur Beleuchtung zumindest eines zu inspizierenden Bereichs der Waferoberfläche (17) und mit einer Kamera (7) zur Aufnahme des zu inspizierenden Oberflächenbereichs, **dadurch gekennzeichnet, dass** die Strahlungsquelle (22) zur Erzeugung telezentrischer Beleuchtung ausgebildet ist.

10. System nach Anspruch 9, **dadurch gekennzeichnet, dass** die Strahlungsquelle (22) einen im wesentlichen punktförmigen Strahler (1) mit einem vorgeschalteten Linsensystem (2; 11) umfasst, um Strahlung mit einer kleinen Beleuchtungsapertur (4) zu erzeugen.

11. System nach Anspruch 9, **dadurch gekennzeichnet, dass** die Strahlungsquelle (22) einen Flächenstrahler (1) geringer Ausdehnung, wie ein Lichtwellenleiter (1), mit einem vorgeschalteten Linsensystem (2; 11) umfasst, um Strahlung mit einer kleinen Beleuchtungsapertur (4) zu erzeugen.

12. System nach einem der Ansprüche 9 bis 11, **dadurch gekennzeichnet, dass** die Kamera (7) mit einem telezentrischen Objektiv (9) ausgestattet ist, wobei der Arbeitsabstand sehr viel größer als die Diagonale des Objektfeldes ist.

13. System nach einem der Ansprüche 9 bis 12, **dadurch gekennzeichnet, dass** die Kameraachse im wesentlichen parallel zur Normalen der Waferoberfläche (17) und auf den beleuchteten Bereich gerichtet angeordnet ist.

14. System nach einem der Ansprüche 9 bis 13, **dadurch gekennzeichnet, dass** zusätzlich zumindest eine Dunkelfeld-Bestrahlungsquelle (25, 26) zur Beleuchtung des zu inspizierenden Bereichs vorgesehen ist.

15. System nach Anspruch 14, **dadurch gekennzeichnet, dass** zwei Dunkelfeld-Bestrahlungsquellen (25, 26) derart angeordnet sind, dass ihre Strahlungsrichtungen einen Winkel von etwa 90° einschließen.

16. System nach einem der Ansprüche 9 bis 15, **dadurch gekennzeichnet, dass** zusätzlich zumindest eine Hellfeld-Bestrahlungsquelle (28) zur Beleuchtung des zu inspizierenden Bereichs vorgesehen ist.
